Europäisches Patentamt

European Patent Office

Office européen des brevets

(11) Veröffentlichungsnummer: **0 433 595 A1**

## (12) EUROPÄISCHE PATENTANMELDUNG

(21) Anmeldenummer: **90119718.6**

(22) Anmeldetag: **15.10.90**

(51) Int. Cl.5: **F16K 31/06**

(30) Priorität: **22.12.89 DE 3942437**

(43) Veröffentlichungstag der Anmeldung:
**26.06.91 Patentblatt 91/26**

(84) Benannte Vertragsstaaten:
**AT BE CH DE DK FR GB IT LI LU NL**

(71) Anmelder: **KARL DUNGS GMBH & CO.**
**Siemensstrasse 6-10**
**W-7068 Urbach(DE)**

(72) Erfinder: **Dungs, Karl, Jr.**
**Justinus-Kerner-Weg 11**
**W-7060 Schorndorf(DE)**
Erfinder: **Neu, Kunibert Dr.**
**Albstrasse 16**
**W-7321 Wangen-Oberwälden(DE)**

(74) Vertreter: **KOHLER SCHMID + PARTNER**
**Patentanwälte**
**Ruppmannstrasse 27**
**W-7000 Stuttgart 80(DE)**

(54) **Gasarmatur.**

(57) Bei einer Gasarmatur, insbesondere für Gasfeuerungsanlagen, mit einem Gehäuse (1), das zwei mit einem Einlaß bzw. Auslaß verbundene Kammern (2 und 3) enthält, die durch eine einen Ventilsitz aufweisende Wand voneinander getrennt sind, und mit einer sich senkrecht zu dieser Wand erstreckenden, mittels eines Antriebs in ihrer Längsrichtung verschiebbaren Stange (20), die einen mit dem Ventilsitz zusammenwirkenden Ventilteller trägt, wobei die Gasarmatur außerdem einen an der Stange (20) angreifenden Gasdruckregler (24) aufweist, wird eine einfache Steuerung des Ausgangsdrucks dadurch erzielt, daß die Stange (20) mit dem Anker (39) eines Proportionalmagnets (26) verbunden ist, der der Kraft ($F_F$) des Antriebs entgegenwirkt.

EP 0 433 595 A1

## GASARMATUR

Die Erfindung betrifft eine Gasarmatur, insbesondere für Gas-Feuerungsanlagen, mit einem Ventil mit einem Gehäuse, das zwei mit einem Einlaß bzw. Auslaß verbundene Kammern enthält, die durch eine einen Ventilsitz aufweisende Wand voneinander getrennt sind, und mit einer sich senkrecht zu dieser Wand erstreckenden, mittels eines Antriebs in ihrer Längsrichtung schiebbaren Stange, die einen mit dem Ventilsitz zusammenwirkenden Ventilteller zeigt, wobei die Gasarmatur außerdem einen an der Stange angreifenden Gasdruckregler aufweist.

Derart ausgebildete Gasarmaturen sind in einer Vielzahl bekannt. Die DE-OS 31 46 591 weist eine derart aufgebaute Gasarmatur auf, mit der der Gasdruck mittels eines eine Membran aufweisenden Gasdruckreglers geregelt wird. Bei dieser Gasarmatur kann der Druck am Armaturenausgang über eine Verstellschraube am Antrieb für das Ventil eingestellt werden. Über diese Einstellung des Antriebs kann die Gasarmatur z. B. für eine bestimmte Brennerleistung eingestellt werden.

Um die Brennerleistung zu variieren, oder um einen Brenner mit variabler Leistung zu schaffen, muß der Ausgangsdruck der Gasarmatur veränderbar sein. Dies ist dadurch möglich, daß die Gasarmatur mit einem weiteren Ventil versehen wird, dessen Ventilquerschnitt stufenlos veränderbar ist. Es sind Gas-Luft-Verbund-Regelungen bekannt, bei denen bei einer Änderung in der Luftzufuhrmenge die Gasmenge entsprechend der Änderung nachgeregelt wird. Hierbei werden die Stellkräfte von Membranen aufgebracht, die in Abhängigkeit der Drücke den Ventilquerschnitt nachregeln. Derart ausgebildete Systeme stellen einen pneumatisch-mechanischen Gas-Luft-Verbund dar.

Der Erfindung liegt die Aufgabe zugrunde, den Ausgangsdruck der Gasarmatur mittels eines elektrischen Signals zu steuern.

Diese Aufgabe wird erfindungsgemäß dadurch gelöst, daß die Stange mit dem Anker eines Proportionalmagnets verbunden ist, der der Kraft des Antriebs entgegenwirkt.

Mit der erfindungsgemäßen Gasarmatur ist es nunmehr mittels des Proportionalmagnets möglich, den Ausgangsdruck ohne die Verwendung eines zusätzlichen Ventils auf einfache Art und Weise zu regeln. Dadurch, daß der Proportionalmagnet über seinen Anker mit der das Ventil der Gasarmatur bedienenden Stange verbunden ist, kann direkt über eine Verschiebung der Stange der Ventilquerschnitt beeinflußt werden. Bei stromlosem Proportionalmagnet bleibt die Gasarmatur bzw. deren Ventil unbeeinflußt, so daß das Ventil in seiner Öffnungslage den über den Antrieb eingestellten maximalen Ventilquerschnitt aufweist. Dabei herrscht am Ausgang der Gasarmatur der voreingestellte Ausgangsdruck. Soll dieser Druck nun abgesenkt werden, so wird der Proportionalmagnet mit einem bestimmten Strom erregt, wodurch der Anker in den Magneten mit einer bestimmten Kraft eingezogen wird. Diese Kraft wirkt der Stellkraft des Antriebs entgegen, wodurch der Öffnungsquerschnitt des Ventils verringert wird. Dies hat zur Folge, daß gleichzeitig der Ausgangsdruck abnimmt. Über die Stromstärke des Proportionalmagnets kann somit der Öffnungsquerschnitt und demzufolge der Ausgangsdruck variiert werden. Ein geringer Ausgangsdruck ist zum Beispiel dann erforderlich, wenn eine geringe Brennerleistung gewünscht wird. Ein Steuersignal für den Proportionalmagnet kann demnach das Ausgangssignal eines elektrischen Temperaturgebers oder -reglers sein, mit dem der Proportionalmagnet direkt angesteuert wird. Eine andere Möglichkeit sieht vor, daß das Stellsignal das Ausgangssignal eines elektrischen Druckgebers ist, der zum Beispiel den herrschenden Luftdruck erfaßt, so daß der Ausgangsdruck in einem Zusammenhang zum Luftdruck steht. Über den Proportionalmagnet ist demnach die Gasarmatur mittels einer elektrischen Größe derart ansteuerbar, daß dessen Ausgangsdruck und somit die Wärmeleistung eines Brenners auf einfache Art und Weise elastisch steuerbar ist.

Die erfindungsgemäße Gasarmatur eröffnet z. B. die Möglichkeit eines mehrstufigen Anfahrens eines Brenners mit beliebiger Verzögerung. Die Anfahrkurve kann durch gezielte Ansteuerung des Proportionalmagnets beliebig ausgestaltet sein. Dadurch kann bei speziell ausgebildeten Gasarmaturen zum Beispiel auf die bisher gebräuchlichen Baugruppen wie Bypassventil, 2-stufiges Ventil und Hydraulikbremse für die verzögerte Öffnung verzichtet werden. Mit der erfindungsgemäßen Ausgestaltung der Gasarmatur ist somit auch ein modulierender Betrieb, das heißt mit atmosphärischem Brenner möglich. Bei einer entsprechenden elektronischen Regelschaltung kann mit der erfindungsgemäßen Gasarmatur auf einfache Weise zum Beispiel eine $O_2$-Regelung, eine Gas-Luft-Verbundregelung, eine Temperaturregelung oder dergleichen vorgenommen werden. Ferner werden sicherheitstechnische Aspekte geschaffen, indem bei einem Ausfall des Proportionalmagnets die Gasarmatur auf konventionelle Weise weiterarbeitet.

Eine vorteilhafte Ausführungsform sieht vor, daß der Proportionalmagnet derart ausgelegt ist, daß bei konstantem Strom eine konstante Kraft auf den in Längsrichtung beweglich in der Spule angeordneten Anker ausgeübt wird. Durch diese Ausgestaltung wird gewährleistet, daß in jeder Stellung des Ventils, das heißt unabhängig davon, ob der Antrieb des Ventils für einen hohen Ausgangsdruck oder einen niederen Ausgangsdruck eingestellt ist, und unabhängig von der Kraft des Gasdruckreglers eine gleiche Stellkraft auf die Ventilstange wirkt. Der Proportionalmagnet übt demnach auch bei einer durch den Gasdruckregler bedingten Änderung der Ventilstellung die gleiche steuernde Kraft auf die Ventilstange aus. Dies gilt auch bei einer nachträglichen Verstellung des Antriebs zum Erhöhen oder Absenken des Ausgangsdrucks. Hierdurch erübrigt sich vorteilhaft eine Neukalibrierung des Proportionalmagnets bzw. dessen vom Erregerstrom abhängigen Stellkraft .

Eine besonders bevorzugte Ausführungsform sieht vor, daß der Proportionalmagnet einen linearen Zusammenhang zwischen dem Erregerstrom und der Stellkraft aufweist. Dies hat den Vorteil, daß zum Beispiel das Ausgangssignal eines Meßfühlers, zum Beispiel eines Temperatur- oder Druckmessers, direkt, das heißt ohne Zwischenschaltung eines Meßwertwandlers, als Erregersignal, das heißt als Erregerstrom für den Proportionalmegnet verwendet werden kann. Der Proportionalmagnet reagiert somit unmittelbar auf eine Änderung des Ausgangssignals eines elektrischen Meßinstrumentes.

Mit Vorteil wirkt der Proportionalmagnet in Schließrichtung des Ventils. Hierin wird ein weiterer sicherheitstechnischer Aspekt gesehen, da z. B. bei einer Fehlansteuerung mit Überspannung die Kraft des Proportionalmagnets schließende Wirkung hat, wodurch das Ventil der Gasarmatur geschlossen und somit die Versorgung des Brenners unterbrochen wird.

Bei einer bevorzugten Ausführungsform ist vorgesehen, daß die Stellkraft des Proportionalmagnets bei maximalem Erregerstrom wenigstens der Stellkraft des Antriebs entspricht. Hierdurch wird die Möglichkeit geschaffen, daß über den Proportionalmagnet der Strömungsquerschnitt des Ventils bis Null geregelt werden kann, so daß auch eine vollständige Sperrung des Ventils möglich ist.

Um die Lagerstellenreibung des Ankers zu minimieren, ist vorteilhaft der Proportionalmagnet mit einem Dither- oder Zittersignal beaufschlagt. Mit dieser Signalansteuerung wird dem Arbeits- oder Steuerstrom eine Frequenz überlagert, so daß sich der Anker stets mit einer kleinen Amplitude bewegt, das heißt mit kleiner Amplitude schwingt, und dadurch den Haftreibungseinfluß verhindert.

Eine Weiterbildung sieht vor, daß der Proportionalmagnet über einen Schwingungsdämpfer an der Stange des Ventils angreift. Mit dem Schwingungsdämpfer, der z. B. als Feder mit geeigneter Federkonstante ausgebildet ist, wird vorteilhaft die Schwingungsbewegung des Proportionalmagnets derart gedämpft, so daß das Ventil selbst von der Schwingungsbewegung nahezu unbeeinflußt bleibt. Eine Lageänderung des Ankers im Magneten wird jedoch unverändert übertragen.

Eine bevorzugte Ausgestaltung sieht vor, daß die Stellkraft des Proportionalmagnets stufenlos verstellbar ist. Hierdurch wird die Möglichkeit geschaffen, zwischen der Schließstellung und der Offenstellung des Ventils jede mögliche Zwischenstellung auf jedem möglichen Weg anzufahren.

Um die Verwendungsmöglichkeit des Proportionalmagnets zu vergrößern, ist vorgesehen, daß dieser als anflanschbarer Nachrüstsatz ausgebildet ist. Hierdurch können durch geringe Umbauarbeiten bereits bestehende Armaturen mit einem derartigen Proportionalmagneten ausgerüstet werden.

Die erfindungsgemäße Gasarmatur wird über ein Magnetventil in die Offen- oder Schließstellung überführt, wobei die Offenstellung dann eingenommen wird, wenn die Magnetspule des Magnetventils von einem Erregerstrom durchflossen wird. Wird dieser Strom unterbrochen, so fällt das Magnetventil ab und die Gasarmatur, das heißt das Ventil der Armatur, geht in seine Schließstellung über. Zum Öffnen oder Schließen der Armatur bedarf es somit lediglich des Erregerstroms für das Magnetventil.

Ferner weist die erfindungsgemäße Gasarmatur einen Gasdruckregler auf, der Schwankungen des Eingangsdrucks $P_e$ gegenüber der Atmosphäre ausgleicht. Dies hat den Vorteil, daß der Ausgangsdruck $P_a$ stets einen konstanten Wert aufweist.

Ferner ist die Stange, die den Ventilteller vom Ventilsitz abhebt, mit dem Anker eines weiteren Magnets verbunden, der bei Erregung die Stange und somit den Ventilteller entgegen der ihn in Offenstellung haltenden Kraft in Richtung der Schließstellung drängt. Durch die unmittelbare Verbindung der Stange mit dem Anker des Proportionalmagnets wird eine direkte Kraftübertragung des Magnets auf den Ventilteller erzielt, so daß das Ventil ohne Zeitverzögerung auf Änderungen des Proportionalmagnets anspricht.

Weitere Merkmale, Vorteile und Einzelheiten der Erfindung ergeben sich aus der nachfolgenden Beschreibung, in der unter Bezugnahme auf die Zeichnung ein besonders bevorzugtes Ausführungsbeispiel im einzelnen beschrieben ist. Dabei zeigen:

Fig. 1    einen Längsschnitt durch eine Gasarmatur mit angeflanschtem Proportionalmagnet; und

Fig. 2    ein Funktionsdiagramm der Gasarmatur, die Arbeitsweise des Proportionalmagnets zeigend.

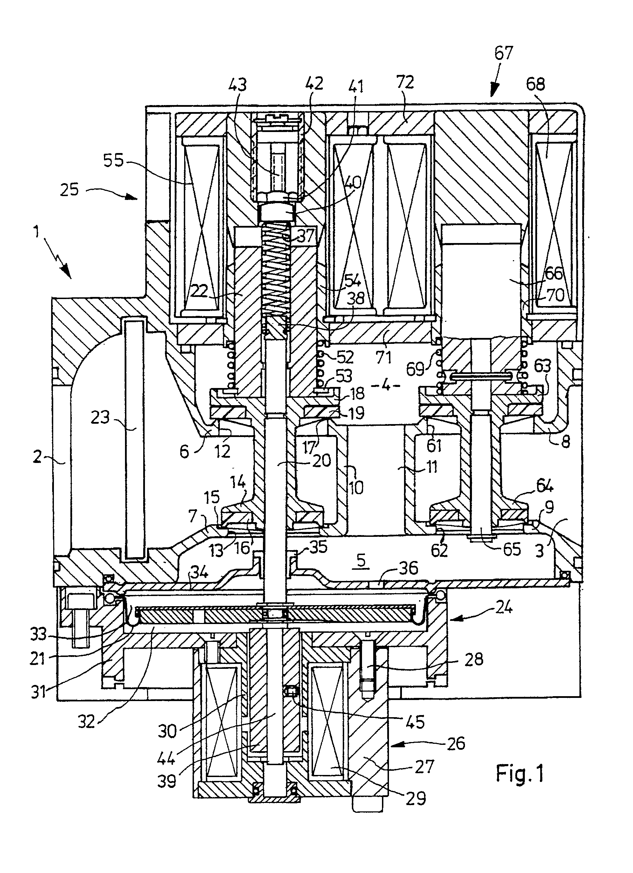

Die in der Figur 1 dargestellte Gasarmatur weist ein mittleres Gehäuseteil 1 auf, das im wesentlichen vier Kammern enthält, nämlich eine an die in der Zeichnung linke Außenfläche angrenzende Einggangskammer 2, eine an die in der Zeichnung rechte Außenfläche angrenzende Ausgangskammer 3 und zwei in der Mitte liegende obere und untere Kammern 4 und 5, von denen die erste einen oberen und die zweite einen unteren Gehäuseabschnitt einnimmt. Die Eingangs- und Ausgangskammern 2 und 3 sind von der oberen Kammer 4 und der unteren Kammer 5 jeweils durch horizontale Wände 6 und 7 bzw. 8 und 9 und außerdem durch eine Querwand 10 voneinander getrennt. In der Querwand 10 ist ein Querkanal 11 vorgesehen, der die beiden mittleren Kammern 4 und 5 miteinander verbindet.

In den horizontalen Wänden 6 und 7, welche die Eingangskammer 2 von den beiden mittleren Kammern 4 und 5 trennen, befindet sich je ein Ventilsitz 12 bzw. 13. Der in der Figur 1 untere Ventilsitz 13 hat eine ebene Anlagefläche, auf welcher ein Ventilteller 14 mit einem schneidenförmigen Rand 15 aufsitzt. Der schneidenförmige Rand 15 befindet sich an einer aus elastischem Material, z. B. Gummi oder dergleichen bestehenden Platte 16, die an der Unterseite des Ventiltellers 14 angebracht ist. Der Ventilteller 14 hat den gleichen Durchmesser wie der obere Ventilsitz 12, der seinerseits einen schneidenförmigen Rand 17 besitzt, auf dem der in der Figur 1 obere Ventilteller 18 mit einer ebenen Anlagefläche aufliegt, die sich an der Unterseite einer am Ventilteller 18 angebrachten, ebenfalls aus einem elastischen Material bestehenden Platte 19 befindet. Beide Ventilteller 14 und 18 sind an einer zur Ebene der Ventilsitze 12 und 13 und Ventilteller 14 und 18 senkrechten Stange 20 derart starr befestigt, daß beide Ventilteller 14 und 18 gleichzeitig an den Ventilsitzen 13 und 12 dichtend anliegen. Die Stange 20 durchdringt die beiden Ventilsitze 12 und 13 und ist an einem Ende mit einer Membran 21 eines Gasdruckreglers 24 verbunden. Außerdem wirkt auf das von der Stange 20 mit den beiden Ventiltellern 14 und 18 gebildete Verschlußglied ein Anker 22 eines Magnetventils 25.

Wie aus der Fig. 1 ersichtlich, befindet sich bei dem dargestelltem Ausführungsbeispiel die Membran 21 des Gasdruckreglers 24 in einem unteren Gehäuseteil 31, das an der Unterseite des mittleren Gehäuseteils 1 befestigt ist und einen Hohlraum enthält, der durch die Membran 21 in zwei Kammern 32 und 33 unterteilt ist. Die obere Kammer 33 ist von der unteren, mittleren Kammer 5 des mittleren Gehäuseteils 1 durch eine Zwischenwand 34 getrennt, die zwischen den beiden Gehäuseteilen 1 und 31 dichtend angeordnet ist. Dabei weist die Zwischenwand 34 ein die Stange 20 führendes Lager 35 auf, in dem die Stange 20 axial verschiebbar geführt ist. Außerdem ist eine die beiden mittleren Kammern 4 und 5 und den Querkanal 11 mit der Kammer 33 des Gasdruckreglers 24 verbindende Öffnung 36 vorgesehen. Auf diese Weise ist gewährleistet, daß in der Kammer 33 des Gasdruckreglers 24 ein Druck herrscht, der für den mittleren Druck in den durch den Querkanal 11 miteinander verbundenen Kammern 4 und 5 charakteristisch ist.

Es ist ersichtlich, daß der auf die Membran 21 wirkende Gasdruck bestrebt ist, die Membran 21 mit der Stange 20 nach unten zu bewegen und dadurch die Ventilteller 14 und 18 an ihre Ventilsitze 13 und 12 anzulegen, also den Durchgang von der Kammer 2 nach den Kammern 4 und 5 zu verschließen. Diesem Gasdruck wirkt eine Regelfeder 37 entgegen, die als Schraubenzugfeder ausgebildet ist und an dem der Membran 21 entgegengesetzten Ende der Stange 20 angreift. Diese Regelfeder 37 trägt an einem Ende ein Anschlußstück 38, das an der Stirnfläche der Stange 20 befestigt ist, wie aus der Figur 1 ersichtlich. Das andere Ende der Regelfeder 37 ist mit einem Gleitstück 40 versehen, das mit einem im Querschnitt sechseckigen Ansatz 41 in einem entsprechend profilierten Rohr 42 unverdrehbar geführt ist. Dieses Rohr 42 ist koaxial zur Stange 20 und zur daran anschließenden Regelfeder 37 angeordnet und enthält eine Stellspindel 43, die an dem der Regelfeder 37 abgewandten Ende des Rohres 42 verdrehbar, jedoch axial unverschiebar gelagert ist. Diese Stellspindel 43 greift in ein Innengewinde des Gleitstücks 40 ein, so daß durch Verdrehen der Stellspindel 43 das Gleitstück 40 in Längsrichtung des Rohres 42 verschiebbar ist. Dadurch läßt sich die Spannung der Regelfeder 37 in weiten Grenzen verändern und der Solldruck einstellen, bei dessen Unterschreiten die Ventilteller 14 und 18 der Gasarmatur von ihren Sitzen 12 und 13 abheben.

Die Gasarmatur ist bei dem dargestellten Ausführungsbeispiel, wie bereits erwähnt, mit einem ersten Magnetventil 25 versehen, dessen Anker 22 koaxial zur Stange 20 und zur Regelfeder 37 angeordnet ist, und eine zentrale Bohrung zur Aufnahme dieser Bauelemente aufweist. Das untere Ende des Ankers 22 ist von einer Schraubendruckfeder 52 umgeben, die sich mit ihrem unteren Ende an einer Schulter des Ankers 22 abstützt, die bei dem dargestellten Ausführungsbeispiel von einem in eine Ringnut des Ankers 22 eingesetzten Sprengring 53 gebildet wird. Das obere Ende der Schraubendruckfeder 52 stützt sich an der unteren Stirnfläche einer Magnetschlußhülse 54 des Magnetventils 25 ab. Bei nicht erregtem Magnetventil 25 sitzt der Anker 22 unter der Kraft der Schraubendruckfeder 52 auf der Oberseite des oberen Ventiltellers 18 auf und hält dadurch die Gasarmatur fest geschlossen. Wird dagegen der Elektromagnet erregt, indem die die Magnetschlußhülse 54 umgebende Spule 55 mit Strom gespeist wird, wird der Anker 22 von dem Ventilteller 18 abgehoben und gibt dadurch das Vertil frei, das unter der Kraft der Regelefeder 37 gemäß dem herschenden Gasdruck mehr oder weniger weit öffnet oder schließt.

Ebenso wie in den horizontalen Wänden 6 und 7 befinden sich auch in den horizontalen Wänden 8 und 9 des mittleren Gehäuseteils 1 Ventilsitze 61 und 62, mit denen Ventilteller 63 und 64 zusammenwirken, die auf einer Stange 65 starr befestigt sind. Die Ausbildung der Ventilsitze 61 und 62 und der Ventilteller 63 und 64 sowie deren Anordnung auf der Stange 65 stimmt mit der vorstehend beschriebenen Anordnung der Gasarmatur vollständig überein, so daß sich eine nochmalige Beschreibung dieser Anordnung erübrigt. Ein Unterschied besteht lediglich in sofern, als die Stange 65 nicht mit der Membran eines Gasdruckreglers verbunden ist, sondern ausschließlich mit einem Anker 66 eines weiteren Magnetventils 67. Dabei besteht zwischen dem Anker 66 und der Stange 65 eine formschlüssige Verbindung, so daß bei Anziehen des Ankers 66 infolge Erregung der Spule 68 die Ventilteller 63 und 64 zwangsweise von ihren Ventilsitzen 61 und 62 abgehoben werden. Bei nicht erregtem Magnetventil 67 werden die Ventilteller 63 und 64 von einer Schraubendruckfeder 69 in geschlossener Stellung gehalten, welche den Anker 66 umgibt und sich einerseits wiederum am unteren Ende einer Magnetschlußhülse 70, andererseits an der Oberseite des Ventilteller 63 abstützt.

Ähnlich wie die untere mittlere Kammer 5 des mittleren Gehäuseteils 1 durch die Zwischenwand 34 abgeschlossen ist, ist die obere mittlere Kammer 4 des mittleren Gehäuseteils 1 durch eine ferromagnetische Platte 71 abgeschlossen, die Bestandteil der Magnetanordnungen der beiden Magnetventile 25 und 67 ist. In diese ferromagnetische Platte 71 sind die Magnetschlußhülsen 54 und 70 der beiden Elektromagnete eingeschraubt, die von den Spulen 55 und 68 umgeben werden. Die aus den Spulen 55 und 68 herrausragenden oberen Enden der Magnetschlußhülsen 54 und 70 sind durch eine weitere feromagnetische Platte 72 miteinander Verbunden. Die Anordnung ist dabei so getroffen, daß die beiden Magnetschlußhülsen 54 und 70 für den magnetischen Fluß in Reihe geschalten sind.

Sind bei der dargestellten Anordnung die beiden Magnetventile erregt und infolgedessen geöffnet bzw. zur Öffnung freigegeben, so kann ein Gasstrom von der Eingangskammer 2 nach Durchströmen eines darin angeordneten Filters 23 in Form zweier paralleler Ströme durch die offenen Ventilsitze 12 und 13 hindurch in die mittleren Kammern 4 und 5 gelangen. Diese Ströme werden dann nach Durchströmen der Ventilsitze 61 und 62 in der Ausgangskammer 3 wieder vereinigt, so daß sie von dort aus einem an das mittlere Gehäuseteil 1 angeschlossenen Verbraucher zugeführt werden können. Durch Schließen eines oder beider Ventile läßt sich der Gasstrom unterbrechen. Dabei ist ersichtlich, daß bei geschlossener Gasarmatur der Gasdruck in der Kammer 2 den oberen Ventilteller 18 im Sinne eines Öffnens und den unteren Ventilteller 14 im Sinne eines Schließens beaufschlagt, so daß sich die durch den Gasdruck auf diese beiden Ventilteller ausgeübten Kräfte aufheben. Dabei ist es wichtig, daß die von den schneidenförmigen Rändern am Ventilteller 14 bzw. am Ventilsitz 12 definierten, wirksamen Flächen der beiden Ventilabschnitte gleich sind. Daher arbeitet das Ventil und insbesondere auch der Gasdruckregler 24 völlig unabhängig vom Druck des zugeführten, ungeregelten Gases. Entsprechendes gilt auch für das dem Ventil nachgeschaltete Ventil, wobei dort das in der oberen Kammer 4 den Ventilteller 63 belastende Gas im Sinne eines Schließens wirkt, wogegen das Gas in der unteren Kammer 5 auf den Ventilteller 64 im Sinne eines Öffnens wirkt. Auch hier heben sich daher die auf die Ventilteller 63 und 64 einwirkenden Kräfte auf. Es sind deshalb weder übermäßige Kräfte erforderlich, um dieses zweite Ventil geschlossen zu halten, noch um es gegen den herrschenden Gasdruck zu öffnen.

Eine einfache Regelung des Ausgangsdrucks wird über einen Proportionalmagneten 26 erreicht. Hierfür ist an der Unterseite des unteren Gehäuseteils 31 ein weiteres Gehäuse 27 zum Beispiel mittels Schrauben 28 angeflanscht. In diesem Gehäuse 27 ist die Magnetspule 29 des Proportionalmagnets 26 gelagert. Die ringförmige Magnetspule 29 weist eine zentrale Öffnung auf, in der eine Magnetschlußhülse 30 und ein Anker 39 angeordnet ist. Dabei sind die Achsen der Magnetspule 29, der Magnetschlußhülse 30 und des Ankers 39 koaxial zur Achse der Stange 20 ausgerichtet. Diese Stange 20 weist unterhalb der Membran 21 einen Fortsatz 44 auf, der den Anker 39 axial durchgreift, und an dem der Anker 39 zum Beispiel mittels einer Madenschraube 45 befestigt ist. Der Fortsatz 44 und die Stange 20 können einstückig ausgebildet sein, der Fortsatz 44 kann jedoch auch zum Beispiel über ein Gewinde in das Ende der Stange 20 unmittelbar unterhalb der Membran 21 angeschraubt, oder über eine (nicht dargestellte) Feder mit dem unteren Ende der Stange 20 verbunden sein.

Wird nun der Proportionalmagnet 26 erregt, indem die Magnetspule 29 mit einem Erregerstrom gespeist wird, wird der Anker 39 in Richtung auf das in der Fig. 1 untere Ende des Gehäuses 27 gezogen. Dies hat zur Folge, daß der Öffnungsquerschnitt, der durch die beiden Ventilteller 14 und 18 und die beiden Ventilsitze 13 und 12 gebildeten Ventile wird, verringert wird. Die Stellkraft des Proportionalmagnets 26 wirkt also der Kraft der Regelfeder 37 entgegen, so daß durch Vergrößerung der Stellkraft eine Verringerung des Ventilquerschnitts erzielt wird. Mit dem Proportionalmagneten 26 kann demnach der Strömungsquerschnitt des Ventils gesteuert werden. Da die Stellkraft des Proportionalmagnets 26 unabhängig von der Lage des Ankers 39 in der Magnetspule 29 ist, wirkt sich eine Änderung der Stellkraft stets als gleiche Änderung des Strömungsquerschnitts des Ventils aus, unabhängig davon, wie groß die Kraft der Regelfeder 37 ist, also unabhängig davon, welche Einstellung die Stellspindel 43 aufweist.

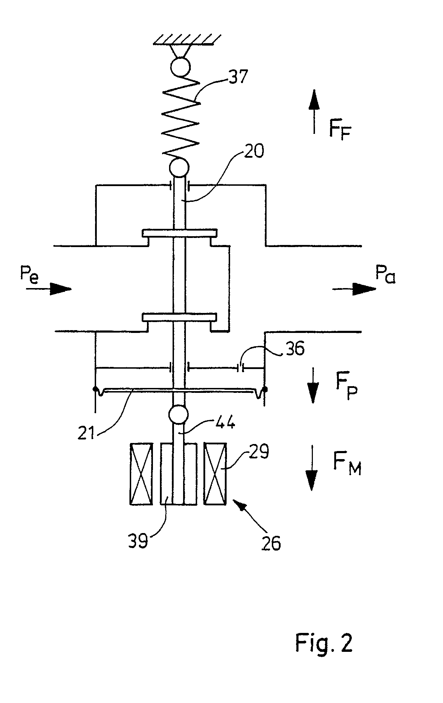

Die Fig. 2 zeigt ein das Prinzip der Gasarmatur wiedergebendes Schaubild, bei dem am oberen Ende der Stange 20 die Zugfeder 37 mit einer Kraft $F_F$ angreift und am unteren Ende der Stange 20 der Ansatz 44 mit dem daran befestigten Anker 39 festgelegt ist. Dieser Anker 39 befindet sich vertikal verschieblich in der Magnetspule 29 des insgesamt mit 26 bezeichneten Proportionalmagneten. Ferner ist mit dem unteren Ende der Stange 20 die Membran 21 gekoppelt, an deren oberen Fläche der Ausgangsdruck $P_a$ und an deren unteren Fläche der Umgebungsdruck anliegt, so daß als Resultierende die Kraft $F_p$ an der Stange 20 wirkt. Wird die Magnetspule 29 des Proportionalmagnets 26 von einem Strom durchflossen, so übt der Proportionalmagnet 26 eine Kraft $F_M$ auf die Stange 20 aus, die der Kraft der Regelfeder 37 entgegengerichtet ist. In eingeregeltem Zustand herrscht Kräftegleichgewicht, wobei die Kraft $F_F$ der Regelfeder 37 gleich der Summe der Kräfte der Membran 21 und des Proportionalmagnets 26 ist. Es gilt demnach:

$$F_F = F_P + F_M.$$

Hieraus ist ersichtlich, daß ein größerer, die Magnetspule 29 durchfließender Strom eine größere Stellkraft $F_M$ des Proportionalmagnets 26 bewirkt, wodurch die Stange 20 soweit abgesenkt wird, bis die Kraft $F_F$ der Regelfeder 37 sich soweit erhöht hat, daß das Kräfteverhältnis wieder im Gleichgewicht ist. Durch das Absenken der Stange 20 wird der Ventilquerschnitt verringert, so daß der Ausgangsdruck $P_a$ ebenfalls geringer ist. Bei einer Verringerung des die Magnetspule 29 durchfließenden Stroms wird der Strömungsquerschnitt des Ventils vergrößert, so daß sich der Ausgangsdruck $P_a$ vergrößert. Dieser Vorgang ist aufgrund des Gasdruckreglers unabhängig von der Größe des Eingangsdrucks $P_e$, da Schwankungen des Eingangsdrucks $P_e$ bereits durch den Gasdruckregler 24 ausgeglichen werden. Es ist ersichtlich, daß auf einfache Weise über den die Magnetspule 29 durchfließenden Strom der Strömungsquerschnitt des Ventils, abhängig hiervon der Ausgangsdruck $P_a$ der Gasarmatur und somit die Brennerleistung gesteuert werden kann.

Wird bei konstanter Kraft $F_F$ der Regelfeder 37 die Kraft $F_M$ des Proportionalmagnets 26 um den Betrag F erhöht, so muß sich die Kraft $F_P$ des Gasdruckregler 24, das heißt die an der Membran 21 angreifende Kraft $F_P$ genau um diese Betrag F absenken, so daß die oben wiedergegebene Gleichung erfüllt ist. Da aber die Fläche der Membran 21 nach wie vor konstant bleibt kann eine Absenkung der Kraft $F_P$ um den Betrag F nur durch eine Absenkung des Ausgangsdrucks $P_a$ bewirkt werden. Es versteht sich, daß die Erfindung nicht auf das dargestellte Ausführungsbeispiel beschränkt ist, sondern Abweichungen davon möglich sind, wobei zum Beispiel das zweite Ventil nicht unbedingt erforderlich ist, und auch Ventile denkbar sind, die nur einen einzigen Ventilteller aufweisen.

**Ansprüche**

1. Gasarmatur, insbesondere für Gasfeuerungsanlagen, mit einem Gehäuse, das zwei mit einem Einlaß bzw. einem Auslaß verbundene Kammern enthält, die durch eine einen Ventilsitz aufweisende Wand voneinander getrennt sind, und mit einer sich senkrecht zu dieser Wand erstreckenden, mittels eines Antriebs in ihrer Längsrichtung verschiebbaren Stange, die einen mit dem Ventilsitz zusammenwirkenden Ventilteller trägt, wobei die Gasarmatur außerdem einen an der Stange angreifenden Gasdruckregler aufweist, dadurch gekennzeichnet, daß die Stange (20) mit dem Anker (39) eines Proportionalmagnets (26) verbunden ist, der der Kraft des Antriebs (Magnetventil 25) entgegenwirkt.

2. Gasarmatur nach Anspruch 1, dadurch gekennzeichnet, daß der Proportionalmagnet (26) derart ausgelegt ist, daß bei konstantem Strom eine konstante Kraft ($F_M$) auf den in Längsrichtung beweglich in einer Magnetspule (29) angeordneten Anker (39) ausgeübt wird.

3. Gasarmatur nach Anspruch 1 oder 2, dadurch gekennzeichnet, daß der Proportionalmagnet (26) einen linearen Zusammenhang zwischen dem Erregerstrom und der Stellkraft ($F_M$) aufweist.

4. Gasarmatur nach einem der vorhergehenden Ansprüche, dadurch gekennzeichnet, daß der Proportionalmagnet (26) in Schließrichtung des Ventils wirkt.

5. Gasarmatur nach einem der vorhergehenden Ansprüche, dadurch gekennzeichnet, daß die Stellkraft ($F_M$) des Proportionalmagneten (26) bei maximalem Strom wenigstens der Stellkraft ($F_F$) des Antriebs entspricht.

6.  Gasarmatur nach einem der vorhergehenden Ansprüche, dadurch gekennzeichnet, daß der Proportionalmagnet (26) mit einem Dither- oder Zittersignal beaufschlagt ist.

7.  Gasarmatur nach einem der vorhergehenden Ansprüche, dadurch gekennzeichnet, daß die Stellkraft ($F_M$) des Proportionalmagneten (26) stufenlos verstellbar ist.

8.  Gasarmatur nach einem der vorhergehenden Ansprüche, dadurch gekennzeichnet, daß der Anker (39) des Proportionalmagnets (26) über einen Schwingungsdämpfer oder eine Feder mit der Stange (20) verbunden ist.

9.  Gasarmatur nach einem der vorhergehenden Ansprüche, dadurch gekennzeichnet, daß der Proportionalmagnet (26) als anflanschbarer Nachrüstsatz ausgebildet ist.

10. Gasarmatur nach einem der vorhergehenden Ansprüche, dadurch gekennzeichnet, daß die Stange (20) derart angeordnet ist, daß sie den Ventilteller (14, 18) in die Offen- oder Schließstellung überführt und der Gasdruckregler (24) zum Ausgleich von Schwankungen des Eingangsdrucks $P_e$ gegenüber der Atmosphäre dient.

Fig.1

Fig. 2

| | **EINSCHLÄGIGE DOKUMENTE** | | | EP 90119718.6 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl⁵) |
| A | AT - B - 226 488 (KROMSCHRÖDER) * Gesamt * -- | | 1-5 | F 16 K 31/06 |
| A | AT - B - 234 449 (KROMSCHRÖDER) * Gesamt * -- | | 1-5 | |
| A | AT - B - 244 699 (KROMSCHRÖDER) * Gesamt * -- | | 1-5 | |
| A | AT B - 253 884 (KROMSCHRÖDER) * Gesamt * -- | | 1-5 | |
| A | DE - B - 1 056 894 (SCHMIDT) * Gesamt * -- | | 1-5 | |
| A | DE - B - 1 163 450 (BÜRKERT) * Gesamt * -- | | 1-5 | RECHERCHIERTE SACHGEBIETE (Int. Cl⁵) |
| A | DE - B - 1 500 634 (AUTOMATIC SWITCH COMP.) * Gesamt * -- | | 1-5 | F 16 K 31/00 F 23 K 5/00 G 05 D 16/00 F 24 C 3/00 |
| A | DE - A - 2 209 206 (FEINMECHANISCHE WERKE MAINZ GMBH) * Gesamt * -- | | 1-5 | |
| A | DE - A1 - 2 809 701 (KROMSCHRÖDER) * Anspruch 1; Fig. 1 * -- | | 1 | |
| A | US - A - 3 900 822 (HARDWICK et al.) * Fig. 1,2; Zusammenfassung * | | 1-5 | |

Der vorliegende Recherchenbericht wurde für alle Patentansprüche erstellt

| Recherchenort | Abschlußdatum der Recherche | Prüfer |
|---|---|---|
| WIEN | 20-02-1991 | BAUMANN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

# EUROPÄISCHER RECHERCHENBERICHT

Nummer der Anmeldung

−2−
EP 90119718.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| | -- | | |
| A | <u>US − A − 4 023 593</u><br>(PICCARDO)<br> * Zusammenfassung; Fig. 1 * | 1 | |
| | -- | | |
| A | <u>US − A − 4 515 343</u><br>(PISCHINGER et al.)<br> * Fig. 1-4; Zusammenfassung * | 1-5 | |
| | -- | | |
| A | <u>US − A − 4 546 955</u><br>(BEYER et al.)<br> * Gesamt * | 1-5 | |
| | ---- | | |

RECHERCHIERTE SACHGEBIETE (Int Cl⁵)

Der vorliegende Recherchenbericht wurde für alle Patentansprüche erstellt.

| Recherchenort | Abschlußdatum der Recherche | Prüfer |
|---|---|---|
| WIEN | 20-02-1991 | BAUMANN |